Europäisches Patentamt

**European Patent Office**

Office européen des brevets

(11) Veröffentlichungsnummer: **0 001 772**
A1

(19)

(12)

# EUROPÄISCHE PATENTANMELDUNG

(21) Anmeldenummer: **78101144.0**

(22) Anmeldetag: **14.10.78**

(51) Int. Cl.²: **B 29 D 27/04**
**B 29 D 27/00**

(30) Priorität: **29.10.77 DE 2748733**

(43) Veröffentlichungstag der Anmeldung:
**16.05.79 Patentblatt 79/10**

(84) Benannte Vertragsstaaten:
**BE DE FR GB NL**

(71) Anmelder: **Bayer Aktiengesellschaft**
**Zentralbereich Patente, Marken und Lizenzen Bayerwerk**
**D-5090 Leverkusen 1(DE)**

(84) Benannte Vertragsstaaten:
**BE DE FR GB NL**

(71) Anmelder: **Maschinenfabrik Hennecke GmbH**

**D-5090 Leverkusen(DE)**

(84) Benannte Vertragsstaaten:
**BE DE FR GB NL**

(72) Erfinder: **Raffel, Reiner, Dipl.-Ing.**
**Schwarzer Weg 19**
**D-5300 Siegburg(DE)**

(72) Erfinder: **Hauptmann, Günter, Dr.**
**Carl-Leverkus-Strasse 2**
**D-5068 Odenthal(DE)**

(72) Erfinder: **Reffelmann, Gerd, Ing.-grad.**
**Untergründemich 13**
**D-5063 Overath(DE)**

(72) Erfinder: **Ebeling, Wilfried, Ing.-grad.**
**Vor Selkoren 29**
**D-5000 Köln 80(DE)**

(54) **Verfahren und Einrichtung zum kontinuierlichen Herstellen von blockförmigem Schaumstoff.**

(57) Zum Vermeiden der Bodenschwarte für die kontinuierliche Herstellung von Blockschaumstoffe wird die Bodenfolie (6) mittels Heizvorrichtungen (3) vor dem Auftragen des Reaktionsgemisches vorgewärmt und die Vorwärmung solange fortgesetzt, bis sich die Reaktionswärme entwickelt.

FIG. 1

EP 0 001 772 A1

MASCHINENFABRIK HENNECKE GMBH       BAYER AKTIENGESELLSCHAFT
                                    Leverkusen, 28. Oktober 1977
                                    Mr/bc


Verfahren und Einrichtung zum kontinuierlichen Herstellen
von blockförmigem Schaumstoff

Die Erfindung betrifft ein Verfahren und eine Einrichtung
zum kontinuierlichen Herstellen von blockförmigem Schaumstoff, insbesondere auf Basis Polyurethan, wobei ein flüssiges Reaktionsgemisch auf eine wandernde Bodenfolie aufgetragen wird, auf der es aufschäumt. Zur Durchführung des
Verfahrens wird ausgegangen von einer Einrichtung, bestehend
aus einem Transportband, dem Seitenbegrenzungen zugeordnet
sind und an dessen Einlaufende eine Abwickelstation für
eine Bodenfolie sowie eine Gemischaufgabevorrichtung vorgesehen sind.

Kontinuierlich gefertigte Schaumstoffblöcke weisen oberhalb der Bodenfolie eine verhärtete Schicht auf, deren
Dichte 10- bis 20-mal höher ist als die Dichte des restlichen Schaumstoffes. Dabei beträgt die Dicke dieser
Schicht, die in der Fachsprache als "Bodenschwarte" bezeichnet wird, je nach Zusammensetzung des chemischen Reaktionsgemisches sowie der Betriebsbedingungen der Einrichtung etwa zwischen 2 und 5 mm. Heute werden Blöcke schon
in einer Höhe bis zu ca. 1 m hergestellt. Die Volumenein-

He 49
(Le A 18 385)

buße durch die verhärtete Schicht beträgt zwar nur 0,2 bis etwa 0,5 %. Durch die sehr hohe Dichte dieser Schicht erhält man jedoch Einbußen, bezogen auf die Masse des hergestellten Schaumstoffes, von ca. 1 bis 5 %, in Extremfällen bis 10 %. Üblicherweise wird zur Ermittlung der ökonomischen Ausnutzung eines Schaumstoffblockes von einem durchschnittlichen Verlust durch die verhärtete Schicht von 3,0 % ausgegangen.

Es ist bekannt, daß die Dicke dieser Schicht reduziert werden kann, indem man das Reaktonsgemisch in bereits anreagiertem Zustand, d.h. bei bereits eingesetzter Schäumreaktion, auf die Bodenfolie aufgibt. Hierzu hat man dem Transportband eine schräge Ebene vorgeschaltet, vor der noch ein Überlaufbehälter vorgesehen ist, dem das Reaktionsgemisch im Boden zugegeben wird. Dieser Überlaufbehälter ist so bemessen, daß das darin befindliche Reaktionsgemisch während des Aufsteigens nach oben bereits anreagiert, so daß an der Oberfläche des Überlaufbehälters bereits in der Entstehung begriffener Schaumstoff vorhanden ist, der dann über die schräge Ebene abgefördert wird und dabei weiter aufschäumt.

Dieses Verfahren hat den Nachteil, daß im Reaktionsgemisch eingeschlossene Gasblasen nicht mehr an die Oberfläche entweichen können, weil dort bereits der ausreagierte Schaumstoff eine solche Zähigkeit besitzt, daß die Gasblasen ihn nicht mehr durchdringen können. Sie verbleiben deshalb im Schaumstoffblock als unerwünschte Fehlerstellen. Ein weiterer Nachteil dieses Verfahrens besteht darin, daß keine Kompatibilität für alle heute üblichen Reaktionsgemisch-

- 3 -

rezepturen gegeben ist.

Aufgabe der Erfindung ist ein Verfahren und eine Einrichtung, womit die Herstellung von Schaumstoffblöcken mit verbesserter Homogenität im Bodenbereich möglich ist, indem die verhärtete Schicht ganz vermieden oder doch zumindest ihre Dicke verringert wird.

Verfahrenstechnisch wird diese Aufgabe gemäß der Erfindung dadurch gelöst, daß die Bodenfolie vor dem Auftragen des Reaktionsgemisches vorgewärmt wird. Dadurch wird erreicht, daß die bei der Reaktion entstehende Wärme über die Bodenfolie nicht mehr an das Transportband oder die sonstige Unterlage abgeführt werden kann, denn dieses bisher in der aufgetragenen Gemischschicht vorhandene Temperaturgefälle war der Grund für die Ausbildung der verhärteten Schicht. Es versteht sich, daß die Erwärmung über denjenigen Bereich der Bodenfolie erfolgen muß, in dem man die Bildung der verhärteten Schicht vermeiden bzw. deren Dicke vermindern will. Dies ist in der Regel über die gesamte Breite der Fall.

Vorzugsweise wird die Vorwärmung bis zur Entwicklung der Reaktionswärme fortgesetzt. Dies ist so zu verstehen, daß beim Abbrechen der Erwärmung von außen die nun drohende Abkühlung der Bodenfolie durch die sich entwickelnde Reaktionswärme kompensiert wird, so daß die Bodenfolie bis zum Abschluß des Aufschäumens auf gehobener Temperatur bleibt.

Nach einer besonderen Durchführungsform des erfindungsge-

He 49
(Le A 18 385)

mäßen Verfahrens wird die Bodenfolie auf eine Temperatur
von 30 bis 120°C, vorzugsweise auf 40 bis 90°C, vorgewärmt.
Der Vorzugsbereich wird der Mehrzahl der heute üblichen
Reaktionsgemischrezepturen und Betriebsbedingungen der
Einrichtung gerecht, der breite Bereich den meisten übrigen, und nur besonders spezielle Rezepturen oder Betriebsbedingungen verlangen Temperaturen außerhalb des breiten
Bereiches.

Nach einer weiteren besonderen Durchführungsform des Verfahrens erfolgt die Vorwärmung in mehreren Stufen unterschiedlicher Temperaturen.

Durch diese Verfahrensweise kann die Temperaturhaltung
besser gesteuert werden und läßt sich den fortschreitenden Reaktionsbedingungen anpassen.

Die Einrichtung zur Durchführung des erfindungsgemäßen Verfahrens ist dadurch gekennzeichnet, daß am Förderweg der
Bodenfolie eine vor der Gemischauftragsvorrichtung beginnende Heizvorrichtung angeordnet ist. Wie weit die
Heizvorrichtung vor der Gemischauftragsvorrichtung beginnen muß, hängt ab von der gewünschten Temperatur, der
zuzuführenden Wärmemenge, der Fördergeschwindigkeit des
Transportbandes, der Wärmeleitfähigkeit bzw. der Wärmeisolierung der mit der erwärmten Bodenfolie in Berührung
kommenden Einrichtungsteile sowie der Menge des Reaktions
gemisches und dessen die Temperaturhaltung betreffende
physikalische Eigenschaften. Die Heizvorrichtung kann
auf die verschiedenste Weise ausgebildet sein. Die Be-

He 49

(Le A 18 385)

- 5 -

heizung der Bodenfolie kann direkt oder indirekt erfolgen, wie beispielsweise durch Infrarotstrahler, Heißlufterhitzung, elektrische Beheizung oder durch entsprechende Heizvorrichtungen mit Anschlüssen für heiße Flüssigkeiten, Dämpfe oder Gase. Als wohl günstigste Heizvorrichtung bietet sich eine elektrisch beheizbare Platte an, über die die Bodenfolie hinweggezogen wird. Diese kann zum Vermeiden von Wärmeverlusten gegenüber anderen Vorrichtungsteilen wärmeisoliert sein. Auch der an die Heizvorrichtung anschließende weitere Weg der Bodenfolie kann mit Wärmeisoliermaterial belegt sein.

Vorzugsweise erstreckt sich die Heizvorrichtung bis in den Bereich der Reaktionszone.

Dadurch wird erreicht, daß immer noch Wärme zugeführt werden kann, während sich die durch die Reaktion entstehende Wärme erst langsam entwickelt.

Nach einer weiteren besonderen Ausführungsform der erfindungsgemäßen Einrichtung besteht die Heizvorrichtung aus mehreren Abschnitten. Durch unterschiedliche Beheizung der Abschnitte läßt sich die Einrichtung besser den erforderlichen Betriebsbedingungen anpassen.

In der Zeichnung ist die erfindungsgemäße Einrichtung rein schematisch an einem Beispiel dargestellt und nachstehend näher erläutert. zeigen:

BAD ORIGINAL

He 49

(Le A 18 385)

- 6 -

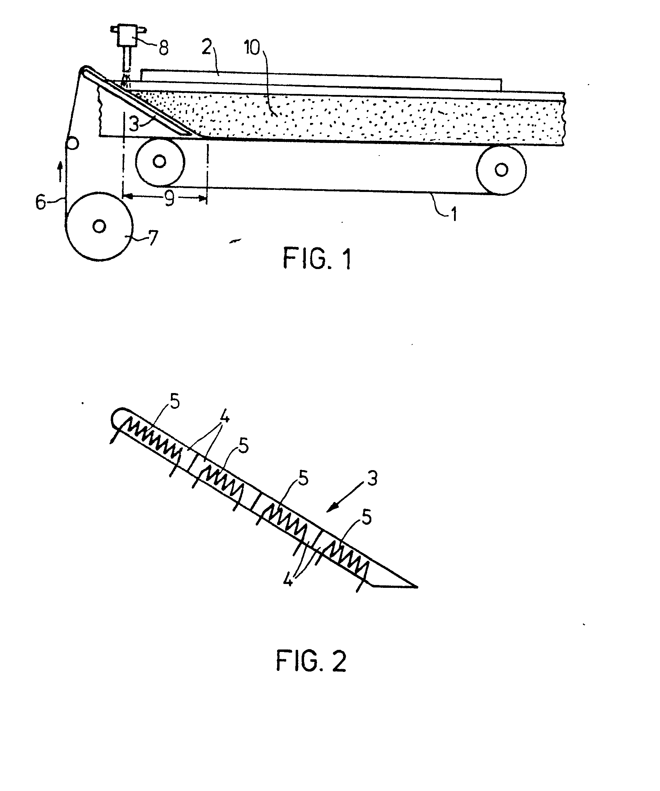

Fig. 1   die Einrichtung in der Seitenansicht und
Fig. 2   die Heizvorrichtung in vergrößerter Darstellung
          in der Seitenansicht.

Die Einrichtung besteht aus einem Transportband 1, dem
Seitenbrenzungen 2 zugeordnet sind und über dessen Einlaufende eine als Heizvorrichtung 3 ausgebildete Platte angeordnet ist. Die Heizvorrichtung 3 besteht aus mehreren Abschnitten 4, in denen jeder eine gesondert anschließbare
Heizspirale 5 aufweist. Der Weg einer Bodenfolie 6, die
von einer Abwickelstation 7 abgezogen wird, ist mit der
Bodenfolie 6 identisch. Über dem Bereich der Heizvorrichtung
3 ist eine Gemischauftragsvorrichtung 8 vorgesehen. Die
Reaktionszone ist mit 9 bezeichnet, der aufgeschäumte Block
mit 10.

Beispiel 1

Es wurde kontinuierlich ein Block aus Polyurethanschaumstoff nach folgender Rezeptur des Reaktionsgemisches hergestellt:

100 Gew.-Teile eines auf Trimethylolpropan gestarteten Polyäthers aus Propylenoxid und Äthylenoxid mit der OH-Zahl 49 und vorwiegend sekundären OH-Gruppen;

1 Gew.-Teil eines handelsüblichen Polyätherpolysiloxans (Stabilisator);

0,15 Gew.-Teile eines tertiären Amins;

0,25 Gew.-Teile Zinndioctoat;

50 Gew.-Teile eines Gemisches aus 80 Gew.-% 2,4- und 20 Gew.-% 2,6-Diisocyanatotoluol;

4 Gew.-Teile Wasser.

Die Bodenfolie hat beim Einlaufen Raumtemperatur, und zwar 24°C.

Die Betriebsdaten der Blockschäumeinrichtung sind folgende:

| | | |
|---|---|---|
| Vorschubgeschwindigkeit des Transportbandes | 2,7 | m/min |
| Breite des Gemischauftrages (Blockbreite) | 1,20 | m |
| Neigung des Transportbandes | 5° | |
| Reaktionsgemischausstoß | 30 | kg/min |
| Länge der Heizvorrichtung | 2,70 | m |
| Breite der Heizvorrichtung | 1,20 | m |
| Heizmedium | Öl | |
| Heizleistung | 8 | kW |
| Temperatur der Bodenfolie durch Beheizung | 61 | °C |

Die Gemischauftragsvorrichtung ist in bezug auf die Heizvorrichtung so angeordnet, daß die Heizvorrichtung noch

He 49-Ausland

(Le A 18 385)

- 8 -

1 m in die Reaktionszone hineinragt, d.h. 1,70 m Länge der Heizvorrichtung befinden sich vor der Gemischauftragsvorrichtung.

Man erhält einen Schaumstoffblock von ca. 52 cm Höhe, der keine verhärtete Schicht aufweist. Auf die gesamte Schaumstoffmasse bezogen, beträgt der Verlust durch die Tränkung der Bodenfolie 1,0 %.

Vergleichsbeispiel

Es wurde unter den gleichen Bedingungen gefahren wie im Beispiel 1, jedoch ohne Vorwärmung der Bodenfolie, die Raumtemperatur (24°C) besaß.

Es wurde ein Block von ca. 50 cm Höhe erhalten, der in der Bodenzone eine verhärtete Schicht von 2 mm Stärke aufwies. Bezogen auf die Gesamtmasse, beträgt der Verlust 3,5 %, im Gegensatz zu 1 % im Beispiel 1.

Beispiel 2

Es wurde kontinuierlich ein Block aus Polyurethanschaumstoff nach folgender Rezeptur des Reaktionsgemisches hergestellt:

100 Gew.-Teile eines auf Trimethylolpropan gestarteten Polyäthers aus Propylenoxid und Äthylenoxid mit der OH-Zahl 49 und vorwiegend sekundären OH-Gruppen

1,6 Gew.-Teile eines handelsüblichen Polyätherpolysiloxans Stabilisator);

0,15 Gew.-Teile eines tertiären Amins;

0,3 Gew.-Teile Zinndioctoat;

He 49

(Le A 18 385)

20 Gew.-Teile Monofluortrichlormethan;

50 Gew.-Teile eines Gemisches aus 80 Gew.-% 2,4- und 20 Gew.-% 2,6-Diisocyanatotoluol;

4,0 Gew.-Teile Wasser.

Die Bodenfolie hat beim Einlaufen Raumtemperatur, und zwar 24°C. Die Betriebsdaten der Blockschäumeinrichtung sind folgende:

| | | |
|---|---|---|
| Vorschubgeschwindigkeit des Transportbandes | 2,5 | m/min |
| Breite des Gemischauftrages (Blockbreite) | 1,20 | m |
| Neigung des Transportbandes | 5° | |
| Reaktionsgemischausstoß | 30 | kg/min |
| Länge der Heizvorrichtung | 2,70 | m |
| Breite der Heizvorrichtung | 1,20 | m |
| Heizmedium | Öl | |
| Heizleistung | 8 | kW |
| Temperatur der Bodenfolie durch Beheizung | 75 | °C |

Die Gemischauftragsvorrichtung ist in bezug auf die Heizvorrichtung so angeordnet, daß die Heizvorrichtung noch 1 m in die Reaktionszone hineinragt, d.h. 1,70 m Länge der Heizvorrichtung befinden sich vor der Gemischauftragsvorrichtung.

Man erhält einen Schaumstoffblock von ca. 65 cm Höhe, der eine verhärtete Schicht von ca. 2 mm Dicke aufweist. Auf die gesamte Schaumstoffmasse bezogen, beträgt der Verlust 4,3 %.

Vergleichsbeispiel

Der Versuch wird unter den gleichen Bedingungen durchgeführt wie in Beispiel 2, jedoch ohne Vorwärmung der Boden-

He 49-Ausland

(Le A 18 385)

folie,die also Raumtemperatur (ca. 24$^O$C) besaß.

Es wurde ein Block von ca. 62 cm Höhe erhalten, der eine 4 mm dicke verhärtete Schicht aufwies. Auf die Geamtmasse bezogen,beträgt der Verlust 9,1 %.

He 49

(Le A 18 385)

- 11 -

Patentansprüche

1) Verfahren zum kontinuierlichen Herstellen von blockförmigem Schaumstoff, insbesondere auf Basis Polyurethan, wobei ein flüssiges Reaktionsgemisch auf eine wandernde Bodenfolie aufgetragen wird, auf der es aufschäumt, dadurch gekennzeichnet, daß die Bodenfolie vor dem Auftragen des Reaktionsgemisches vorgewärmt wird.

2) Verfahren nach Anspruch 1, dadurch gekennzeichnet, daß die Vorwärmung bis zur Entwicklung der Reaktionswärme fortgesetzt wird.

3) Verfahren nach Anspruch 1 oder 2, dadurch gekennzeichnet, daß die Bodenfolie auf eine Temperatur von 30 bis 120°C vorgewärmt wird.

4) Verfahren nach Anspruch 3, dadurch gekennzeichnet, daß die Bodenfolie auf eine Temperatur von 40 bis 90°C vorgewärmt wird.

5) Verfahren nach Anspruch 1 bis 4, dadurch gekennzeichnet, daß die Vorwärmung in mehreren Stufen unterschiedlicher Temperaturen erfolgt.

6) Einrichtung zur Durchführung des Verfahrens, bestehend aus einem Transportband, dem Seitenbegrenzungen zugeordnet sind und an dessen Einlaufende eine Abwickelstation für eine Bodenfolie sowie eine Gemischaufgabevorrichtung vorgesehen sind, dadurch gekennzeichnet, daß am Förderweg der Bodenfolie (6) eine vor der Gemischauftragsvorrichtung (8) beginnende Heizvorrichtung (3) angeordnet ist.

He 49

(Le A 18 385)

7) Einrichtung nach Anspruch 6, dadurch gekennzeichnet, daß sich die Heizvorrichtung (3) bis in den Bereich der Reaktionszone (9) erstreckt.

8) Einrichtung nach Anspruch 6 oder 7, dadurch gekennzeichnet, daß die Heizvorrichtung (3) aus mehreren Abschnitten (4) besteht.

FIG. 1

FIG. 2

# EUROPÄISCHER RECHERCHENBERICHT

**Europäisches Patentamt**

0001772 Nummer der Anmeldung

EP 78 101 144.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A - 2 508 813</u> (POLICASTILLA) <br> * Anspruch 6; Seite 9, Zeilen 12 bis 21; Fig. 1 * <br><br> -- | 1 |
| X | <u>FR - A - 2 322 718</u> (POLICASTILLA) <br> * Anspruch 5; Fig. 1 * <br><br> -- | 1 |
| P | <u>DE - A - 2 722 841</u> (ESPUMACIONES INDUSTRIALES RODAY) <br> * Ansprüche 1, 2, 3; Seite 3, Zeile 22 bis Seite 5, Zeile 7 * <br><br> -- | 1,2, 3 |
| A | <u>GB - A - 1 230 073</u> (AEROPREEN) <br> * ganzes Dokument * <br><br> ---- | |

**KLASSIFIKATION DER ANMELDUNG (Int.Cl.²)**

B 29 D 27/04
B 29 D 27/00

**RECHERCHIERTE SACHGEBIETE (Int. Cl.²)**

B 29 D 27/00
B 29 D 27/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 05-02-1979 | BRUCK |

EPA form 1503.1 06.78